# EUROPEAN PATENT APPLICATION

(11) **EP 1 818 965 A2**
(43) Date of publication of application: **15.08.2007**
(21) Application number: 06123947.1
(22) Date of filing: 13.11.2006
(51) Int. Cl.: H01J 5/03, H01J 9/42, H01J 17/04, H01J 17/16

(54) **Flat panel display and display panel device having the same**

(30) Priority: 10.02.2006 JP 2006033192
(71) Applicant: Fujitsu Hitachi Plasma Display Limited, Kunitomi-cho, 880-1194 Miyazaki Higashimorokata-gun (JP)
(72) Inventor: Fujimoto, Akihiro, Higashimorokata-gun, Miyazaki 880-1194 (JP); Okada, Hisashi, Higashimorokata-gun, Miyazaki 880-1194 (JP); Kawano, Hironobu, Higashimorokata-gun, Miyazaki 880-1194 (JP); Hori, Nobuyuki, Higashimorokata-gun, Miyazaki 880-1194 (JP)
(74) Representative: Wilding, Frances Ward

(57) **Abstract**

A flat panel display having an improved impact resistance performance is provided. The flat panel display includes a front panel (10) made up of a transparent substrate and a laminate that is fixed to the back side of the transparent substrate, and a back panel (20) that is adhered to the front panel. The transparent substrate of the front panel has a remaining tensile stress while the laminate of the same has a remaining compressive stress.

## Description

### BACKGROUND OF THE INVENTION

### 1. Field of the Invention

The present invention relates to a flat panel display typified by a plasma display panel and a liquid crystal display, a display panel device having the flat panel display, and a front panel that is used for manufacturing a plasma display panel.

### 2. Description of the Prior Art

A plasma display panel is a flat panel display made up of a pair of glass substrates and film-like elements disposed between the glass substrates, and it is used for a thin television set and other various display devices.

In general, the display device having the plasma display panel is equipped with a plate filter having a size covering the entire screen. This plate filter is made up of a tempered glass that is a substrate and a function film adhered to the surface of the tempered glass and the plate filter is disposed at the front of the plasma display panel. The function film performs various roles concerning a display operation including optical adjustment of display colors, prevention of reflection of external light, shielding of electromagnetic waves, and shielding of near infrared rays.

The plate filter protects the plasma display panel mechanically. More specifically, the plate filter works as a protection glass for preventing the plasma display panel from being broken. However, it is a problem that the plate filter itself has a large weight. For example, the weight of the plate filter exceeds 4 kg in a display device having a screen size of 42 inches diagonal. In addition, since there is a gap between the plate filter and a plasma display panel, double exposure may occur due to reflection of external light resulting in a degradation of display quality.

These problems may be solved by using a film filter including a resin film as a substrate instead of the plate filter and adhering the film filter directly to the front face of the plasma display panel. There are many proposals about a layer structure or a material of the film filter. For example, Japanese unexamined patent publication No. 2001-343898 discloses a filter made up of a transparent conductive film that reduces electromagnetic emission noises and an antireflection film that is adhered to the front side of the transparent conductive film.

If the display device does not have a protection glass, it is required that the flat panel display itself has an impact resistance performance so that the screen is not broken even if a man or an object hits the screen.

### SUMMARY OF THE INVENTION

An object of the present invention is to improve the impact resistance performance of the flat panel display. Another object is to provide a display device that has a small weight, high display quality and high impact resistance on the front side.

A flat panel display according to an aspect of the present invention includes a front panel made up of a transparent substrate and a laminate that is fixed to the back side of the transparent substrate, and a back panel that is adhered to the front panel. The transparent substrate of the front panel has a tensile stress and the laminate of the same has a compressive stress.

According to one aspect of the present invention, the impact resistance performance is enhanced by forming a specific stress distribution in the front panel. It is confirmed from an experiment of applying an impact to the front side of the flat panel display that an origin of cracks generated by the impact is not on the front side but on the rear side. In other words, when the impact of a predetermined pressure or more is applied to the front face of the transparent substrate, a crack is generated in the laminate fixed to the back face of the transparent substrate first. Then, in many cases, the crack spreads to the transparent substrate without stopping within the laminate. Considering this result, a compressive stress is given to the laminate in the present invention. This compressive stress resists an impact force that presses the transparent substrate and the laminate backward, i.e., a force that intends to stretch the laminate, so that generation of a crack in the laminate is suppressed. Furthermore, in the present invention, a tensile stress is given to the transparent substrate. This tensile stress resists an impact force that intends to compress the front side of the transparent substrate, so that an impact that is applied to the laminate is weakened.

### BRIEF DESCRIPTION OF THE DRAWINGS

Fig. 1 is a front view of a plasma display panel showing its general structure.
Fig. 2 is a cross section cut along the z-z line of Fig. 1.
Fig. 3 is an exploded perspective view of the plasma display panel showing an example of its cell structure.
Fig. 4 is a schematic diagram showing a feature of a front panel according to the present invention.
Fig. 5 is a graph showing a relationship between a stress state of the front panel and impact resistance strength.
Fig. 6 is a diagram showing a method for measuring the impact resistance strength.
Fig. 7 is an exploded perspective view showing a structure of a display panel device to which the present invention is applied.
Fig. 8 is a perspective view showing an appearance of a display device to which the display panel device is attached.
Fig. 9 is a cross section of the display device showing its inside structure.

### DESCRIPTION OF THE PREFERRED EMBODIMENTS

The invention will now be described in detail with reference to the attached drawings.

A preferred flat panel display as an application object of the present invention is a plasma display panel. First, a basic structure of the plasma display panel will be described.

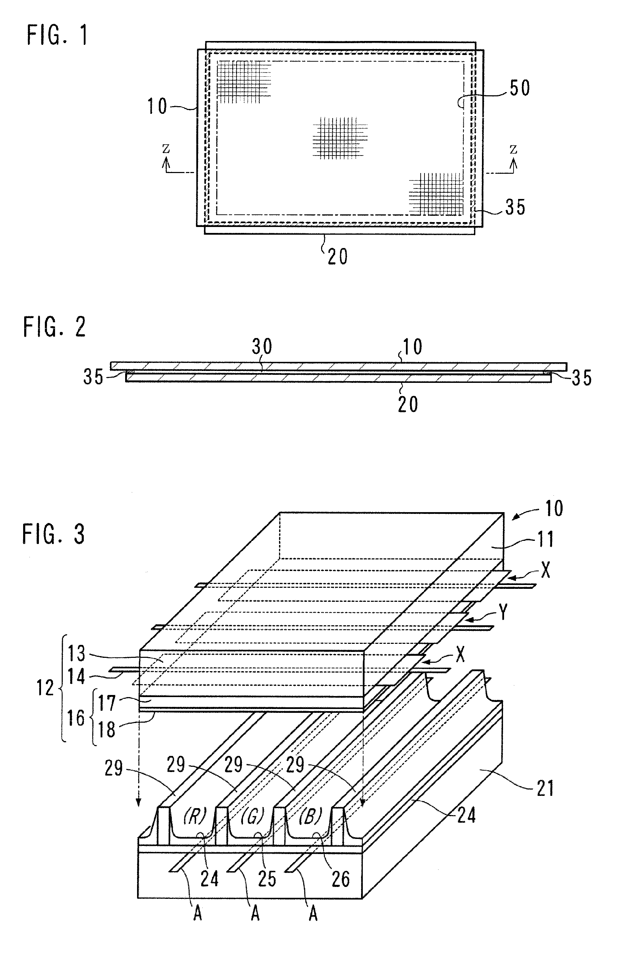

Fig. 1 is a front view of a plasma display panel showing its general structure, and Fig. 2 is a cross section cut along the z-z line of Fig. 1. The plasma display panel is made up of a front panel 10, a back panel 20, and discharge gas (not shown). The plasma display panel has a screen 50 made up of cells (light emission elements) arranged in the vertical and the horizontal directions. If a size of the screen is 42 inches diagonal for example, the plasma display panel has dimensions of approximately 994 mm × 585 mm. Each of the front panel 10 and the back panel 20 includes a glass substrate having an area larger than the screen 50 and a thickness of approximately 3 mm on which a plurality of layers including electrodes are formed. The front panel 10 and the back panel 20 are disposed to face each other and are bonded to each other at the periphery by a sealing member 35 like a frame disposed at the periphery of the panels 10 and 20. In Fig. 1, left and right edges of the front panel 10 are extended from the edges of the back panel 20 by approximately 5 mm, while upper and lower edges of the back panel 20 are extended from the edges of the front panel 10 by approximately 5 mm. At the extended edge portions of the front panel 10 and the back panel 20 are connected to flexible printed circuit boards for electric connection with a driving circuit board. An inner sealed space (a discharge gas space) 30 enclosed by the front panel 10, the back panel 20 and the sealing member 35 is filled with discharge gas that is a mixture of neon and xenon. The discharge gas space 30 has a thickness within the range of 100-200 µm.

Fig. 3 is an exploded perspective view of the plasma display panel showing an example of its cell structure. In Fig. 3, the front panel 10 and the back panel 20 are separated from each other for easy understanding of the inner structure.

The front panel 10 includes a glass substrate 11, first row electrodes X, second row electrodes Y, a dielectric layer 17, and a protection film 18. The back panel 20 includes a glass substrate 21, column electrodes A, a dielectric layer 24, a plurality of partitions 29, a red (R) fluorescent material 24, a green (G) fluorescent material 25, and a blue (B) fluorescent material 26.

Each of the row electrodes X and the row electrodes Y is made up of a patterned transparent conductive film 13 and a metal film 14. The dielectric layer 17 and the protection film 18 constitute an insulator layer 16, which covers the row electrodes X and Y over the entire of the screen. The transparent conductive film 13, the metal film 14, the dielectric layer 17 and the protection film 18 constitute a laminate 12 that is fixed to the glass substrate 11.

When the present invention is embodied, an arrangement of the row electrodes can be either one of two known types. In one type, all the row electrode gaps are set to be the same as shown in Fig. 3. In another type, an electrode gap between neighboring cells is set to be larger than an electrode gap in each cell (a surface discharge gap).

In the plasma display panel structured as described above, a structural element that is related directly to the present invention is the front panel 10. The front panel 10 has a following feature.

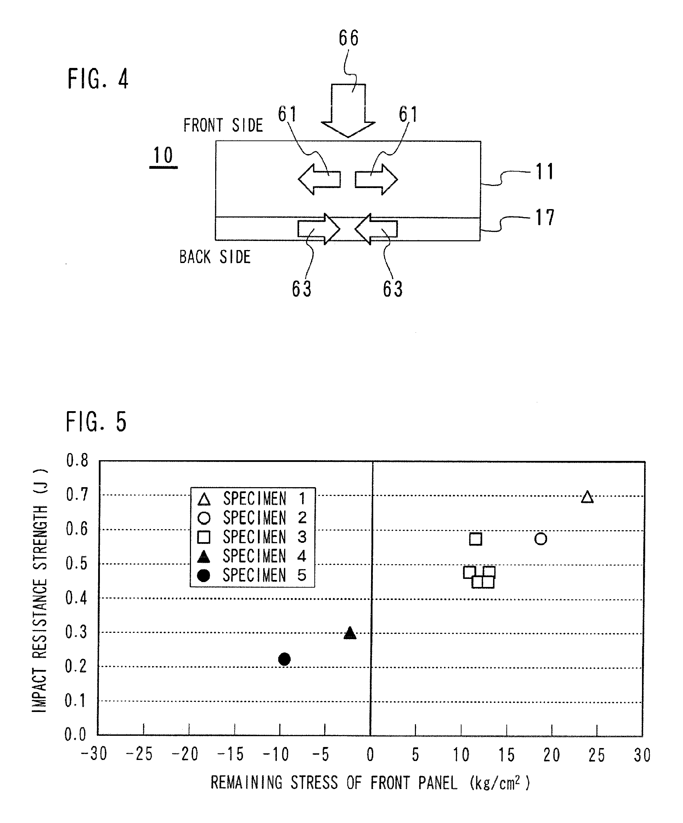

Fig. 4 is a schematic diagram showing a feature of the front panel according to the present invention. In Fig. 4 and other drawings below, elements corresponding to the elements shown in Figs. 1-3 are denoted by the same reference numerals or letters as in Figs. 1-3 for easy understanding.

In Fig. 4, the front panel 10 is made up of the glass substrate 11 and the dielectric layer 17 that is fixed to the back side of the glass substrate 11. Actually, as described above, the laminate consisting of the row electrode, the dielectric layer and the protection film is fixed to the back side of the glass substrate 11. However, what contributes to an improvement of an impact resistance performance substantially is the dielectric layer 17 that occupies major part of a volume of the laminate. Therefore, the dielectric layer 17 is noted here.

A feature of the front panel 10 is that the glass substrate 11 has a tensile stress 61 and the dielectric layer 17 has a compressive stress 63. More specifically, the front side of the front panel 10 is given the stress 61 that intends to stretch the front panel 10 from the middle to the periphery. On the contrary, the back side of the front panel 10 is given the stress 63 that intends to compress the front panel 10 from the periphery to the middle. This stress state can be obtained by selecting appropriate materials for the glass substrate 11 and the dielectric layer 17 considering a relationship between coefficients of thermal expansion of them, and by controlling a thermal profile when the dielectric layer 17 is formed. In order to obtain a desired stress state, it is preferable that a value of the coefficient of thermal expansion of the dielectric layer 17 is smaller than a value of the coefficient of thermal expansion of the glass substrate 11 (e.g., 84 × 10⁻⁷ to 87 × 10⁻⁷/°C).

The stress 61 resists an impact force 66 that intends to compress the front side of the glass substrate 11 and weakens the impact that is applied to the laminate. The stress 63 resists the impact force 66 that intends to press the dielectric layer 17 backward and suppresses generation of a crack in the dielectric layer 17. These stresses act to improve the impact resistance performance of the front panel 10.

In order to confirm the effect of the present invention, a plurality of the front panels 10 were manufactured for trial with changing only the material or film forming conditions of the dielectric layer 17, and stresses thereof were measured. Then, each of the plurality of manufactured front panels 10 is adhered to one of plurality of the back panels 20 having the same structure so as to manufacture a plasma display panel for trial, and impact resistance intensities thereof were measured.

The measurement of stresses was performed by using a SP-125 type polarimeter manufactured by SHINKO SEIKI CO., LTD. In the measurement, a strip piece having a width of 2 cm cut out from the front panel 10 was used as a specimen. The cut area is the middle portion of the front panel 10 to which the impact is applied in the impact strength test.

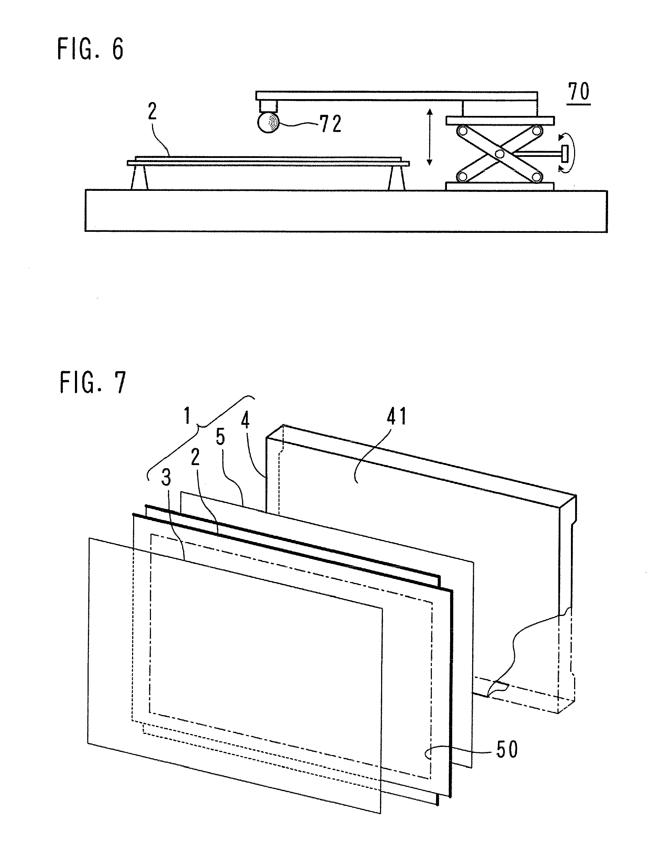

The impact resistance strength was measured by a hardball drop test method. Using an elevating instrument 70 as shown in Fig. 6, a steel ball 72 having a weight of 509 grams was dropped freely toward the plasma display panel 2 placed horizontally with the front panel on the upper side. It was checked whether or not a crack was generated by a visual inspection. The height of the dropping position was increased step by step at a rate of 5 mm or 1 cm, and the height at which a crack was generated was recorded. The position energy based on the height and the weight of the steel ball 72 was calculated as the impact resistance strength.

Fig. 5 shows a relationship between the stress state of the front panel and the impact resistance strength. The horizontal axis of the graph shown in Fig. 5 indicates a remaining stress in the glass substrate 11 of the front panel 10. If a value of the remaining stress is positive, the remaining stress is a tensile stress. If a value of the remaining stress is negative (-), the remaining stress is a compressive stress. In other words, the right-hand area from the middle in Fig. 5 (in which the remaining stress is positive) corresponds to a pressure state shown in Fig. 4 schematically.

In Fig. 5, each of the specimens 1, 2 and 3 has a layer made of silicon dioxide as the dielectric layer 17 having a thickness of 10-30 µm that is formed by a plasma vapor phase growth method. The film forming condition is as follows.
Device type: parallel flat plate type
Introduced gas and its flow rate: silane (SiH₄) at 3000 SCCM
Introduced gas and its flow rate: nitrogen monoxide (N₂O) at 30000 SCCM
Introduced gas and its flow rate: SiH₄ at 900 SCCM, N₂O at 10000 SCCM
High frequency output: 7 kW
Substrate temperature: 350-400 °C
Degree of vacuum: 1-3 Torr

Each of the specimens 4 and 5 has a layer made of low melting point glass as the dielectric layer 17 having a thickness of 30-50 µm that is formed by burning a glass frit. The low melting point glass contains at least one oxide of an element selected from a group consisting of Pb, Bi, Zn, P and Sn for lowering the burning temperature.

A structural condition common to the specimens 1-5 is as follows.
Screen size: 42 inches diagonal
Glass substrates 11 and 21: high distortion point glass having a thickness of 2.8 mm
Transparent conductive film 13: ITO (Indium Tin Oxide) having a thickness of approximately 5000 angstroms
Metal film 14: laminate of Cr-Cu-Cr having a total thickness of approximately 4 µm
Protection film 18: magnesia (MgO) having a thickness of approximately 1 µm
Partition 29: low melting point glass having a height of 100-150 µm
Discharge gas pressure: 67 kPa (approximately 500 Torr)

In Fig. 5, if the glass substrate 11 has a compressive stress of approximately -2 kg/cm² like the specimen 4 for example, the impact resistance strength at the middle of the screen is approximately 0.3 J. In contrast, if the glass substrate 11 has a tensile stress of approximately 12 kg/cm² like the specimen 3, the impact resistance strength at the middle of the screen is approximately 0.47 J.

As shown in Fig. 5, the larger the tensile stress of the glass substrate 11 is, the larger the impact resistance strength is. However, although not shown in the drawing, a result was obtained that indicates that the larger the screen impact resistance strength at the middle was, the more a variation of the impact resistance strength among a plurality of positions in the screen was conspicuous. By summing up these results, it is preferable that the stress state in the glass substrate 11 has a tensile stress of 7-15 kg/cm². It is more preferable that the stress state has a tensile stress of 10-12 kg/cm². In this state, even if the front face of the glass substrate 11 is exposed, impact resistance strength of 0.4-0.6 J can be obtained. In an actual application, it is preferable to adhere a film filter or other sheet having an impact absorbing function to the front face of the glass substrate 11, so that higher impact resistance strength can be obtained.

The plasma display panel 2 having the enhanced impact resistance performance according to the present invention is useful for manufacturing a light weight display device without a protection glass.

Fig. 7 is an exploded perspective view showing a structure of a display panel device to which the present invention is applied.

In Fig. 7, the display panel device 1 is made up of a plasma display panel 2 that is capable of displaying color images, a filter 3 that is adhered to the front face of the plasma display panel 2, a substrate 4 having stiffness, and an adhesive member 5 for adhering the plasma display panel 2 to a panel supporting face 41 of the substrate 4.

A plane size of the plasma display panel 2 corresponds to the screen size. For example, if the screen size is 42 inches diagonal (0.92 meters × 0.52 meters), a size in the horizontal direction is approximately 0.99 meters while a size in the vertical direction is approximately 0.58 meters.

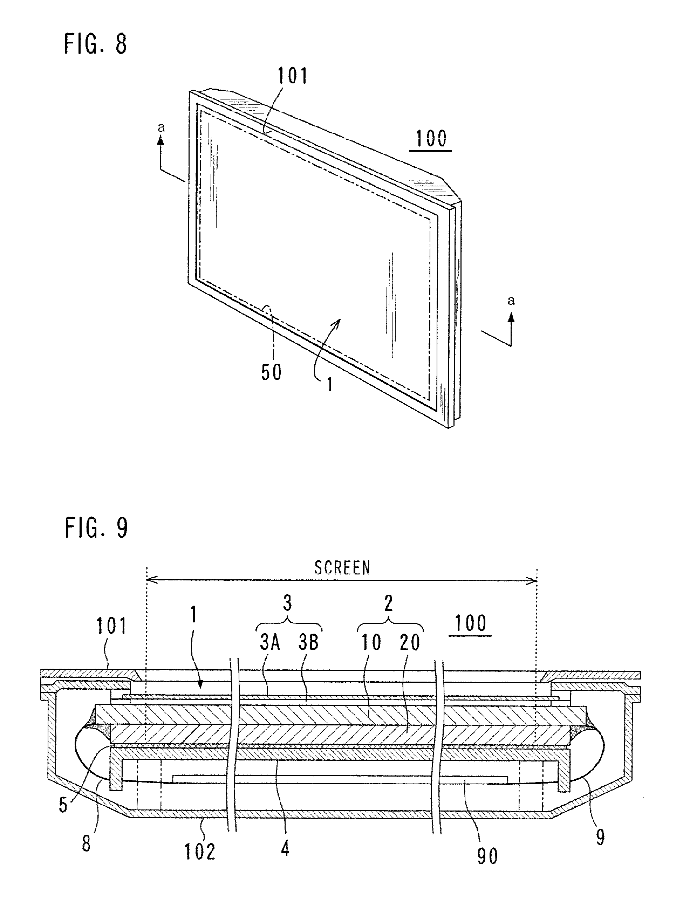

The filter 3 is a flexible laminate made of a function film 3A and an adhesion layer 3B made of a resin having a thickness of approximately 0.5 mm. The function film 3A has a multi-layer structure having a thickness of approximately 0.3 mm including an antireflection layer, a dye filter layer and an electromagnetic shield layer (see Fig. 9).

The substrate 4 is a metal structure having a box-like shape without a bottom including a rectangular principal surface portion larger than the screen 50 and side face portion that is connected to the periphery of the principal surface portion. The substrate 4 is made of an aluminum alloy plate having a thickness of approximately 1-5 mm by a press work. The front face of the principal surface portion is flat, and this front face is the panel supporting face 41. A block and a spacer for stiffening and the driving circuit board are attached to the back face of the principal surface portion.

The adhesive member 5 is a pressure sensitive adhesive double coated sheet or a plurality of pressure sensitive adhesive double coated tapes arranged in parallel. The adhesive member 5 is used for fixing the plasma display panel 2 to the substrate 4 with sufficient strength, and it is disposed between the plasma display panel 2 and the substrate 4 as an impact absorbing layer having a thickness of approximately 1.5-2 mm. An acrylic elastomer or a silicone elastomer has a good thermal conductivity (that is 1.3-2.3 W/m·K) as a suitable material for the adhesive member 5.

The display panel device 1 described above is incorporated in a display device as shown in Figs. 8 and 9, which is used for displaying a television pictures or color images outputted from a computer or the like.

In Fig. 8, a display device 100 is a so-called thin type. A decorative cover 101 that determines a plane size of the display device 100 has an aperture larger than the screen 50, and the front face of the display panel device 1 is exposed except for the peripheral portion. Therefore, in the screen area, there is only the soft filter 3 having a thickness less than 1 mm on the front side of the front panel 10 of the plasma display panel 2, and there is no strong protection glass.

As shown in Fig. 9 that is a cross section cut along the a-a line of Fig. 8, in the display device 100, the display panel device 1 is disposed together with the driving circuit board 90 in a conductive case (shield box) 102 to which the decorative cover 101 is attached. The conductive case 102 is made up of a frame having an opening a little larger than the screen and a plate molded like a thin box.

The display panel device 1 is fixed by fastening the substrate 4 (chassis) to the conductive case 102 by using screws. The driving circuit board 90 is disposed on the back side of the substrate 4. Electric connection between the driving circuit board 90 and the plasma display panel 2 is made by using flexible cables 8 and 9. In Fig. 9, a power source, a picture signal processing circuit and an audio circuit are omitted.

In the embodiment described above, after integrating the front panel 10 with the back panel 20, e.g., when the plasma display panel 2 is attached to the substrate 4, it is possible to fix it with a mechanical pressure, so that the front panel 10 has a remaining tensile stress or that an existing tensile stress is increased.

The structure of the display panel device 1 can be modified in accordance with a spirit of the present invention, if necessary. The materials and shapes of the structural members are not limited to the example described above. The plasma display panel 2 is not limited to the surface discharge type but can be a counter discharge type. Furthermore, the present invention can be applied to other flat panel displays without limiting to the plasma display panel. For example, the present invention can also be applied to a liquid crystal display including a front glass plate to which an orientation film is fixed so that impact resistance performance thereof can be improved.

The present invention is useful for improving impact resistance performance of a thin display device having a flat panel display without a protection glass on the front side, and it contributes to commercialization of a light weight and thin display device.

While example embodiments of the present invention have been shown and described, it will be understood that the present invention is not limited thereto, and that various changes and modifications may be made by those skilled in the art without departing from the scope of the invention as set forth in the appended claims and their equivalents.

## Claims

1. A flat panel display comprising:
a front panel made up of a transparent substrate and a laminate that is fixed to a back side of the transparent substrate; and
a back panel that is adhered to the front panel, wherein
the transparent substrate of the front panel has a tensile stress and the laminate of the same has a compressive stress.

2. The flat panel display according to claim 1, wherein impact resistance strength at a middle position of the front panel measured by a hardball drop test is 0.4 J or more.

3. A front panel used for manufacturing a plasma display panel, comprising:
a glass substrate on which electrodes are arranged; and
an insulator layer for covering the electrodes, wherein
the glass substrate has a tensile stress and the insulator layer has a compressive stress.

4. The front panel according to claim 3, wherein a value of the tensile stress of the glass substrate is within a range of 7-15 kg/cm².

5. The front panel according to claim 3 or 4, wherein a value of a coefficient of thermal expansion of the insulator layer is smaller than a value of a coefficient of thermal expansion of the glass substrate.

6. A display panel device comprising a plasma display panel and a function film adhered to a front face of the plasma display panel, wherein
the plasma display panel includes a front panel made up of a glass substrate on which electrodes are arranged and an insulator layer that covers the electrodes, and
the glass substrate of the front panel has a tensile stress and the insulator layer of the same has a compressive stress.

7. The display panel device according to claim 6, wherein impact resistance strength at a middle position of the front panel measured by a hardball drop test is 0.4 J or more.

8. A display panel device comprising a plasma display panel and a rigid member supporting the plasma display panel, wherein
the plasma display panel includes a front panel made up of a glass substrate on which electrodes are arranged and an insulator layer that covers the electrodes, and the insulator layer in a state having a compressive stress is fixed to the rigid member.

9. The display panel device according to claim 8, wherein impact resistance strength at a middle position of the front panel measured by a hardball drop test is 0.4 J or more.

10. The display panel device according to claim 9, further comprising a function film adhered to a front face of the plasma display panel.
